# FASCICULE DE BREVET EUROPEEN

(11) **EP 3 981 664 B1**
(45) Date de publication et mention de la délivrance du brevet: **04.12.2024**
(21) Numéro de dépôt: 21201367.6
(22) Date de dépôt: 07.10.2021
(51) Int. Cl.: B61D 33/00, B60N 3/00, B60J 1/20, B64D 11/06

(54) **VÉHICULE ET PROCÉDÉ D'UTILISATION D'UN AGENCEMENT INTERIEUR D'UN VÉHICULE**
FAHRZEUG UND VERWENDUNGSVERFAHREN EINER FAHRZEUGINNENAUSSTATTUNG
VEHICLE AND METHOD FOR USING THE INTERIOR LAYOUT OF A VEHICLE

(30) Priorité: 07.10.2020 FR 2010242
(43) Date de publication de la demande: 13.04.2022
(73) Titulaire: SpeedInnov, 75008 Paris (FR)
(72) Inventeur: BERNARD, Alexandre, 17340 Chatelaillon Plage (FR)
(74) Mandataire: Lavoix

(56) Documents cités:
- WO-A1-2018/033599
- WO-A1-2019/175053
- CN-A- 108 749 841
- CN-U- 209 290 399
- DE-A1- 102004 050 730
- FR-A1- 3 066 957

## Description

La présente invention concerne un véhicule ferroviaire ou routier de transport de passager, comprenant un agencement intérieur de véhicule, comprenant :
- un premier siège, comprenant une première assise et un premier dossier, définissant horizontalement une première direction d'assise, depuis le premier dossier vers une extrémité libre de la première assise;
- un deuxième siège, comprenant une deuxième assise et un deuxième dossier, définissant horizontalement une deuxième direction d'assise, depuis le deuxième dossier vers une extrémité libre de la deuxième assise, le premier et le deuxième siège délimitant un couloir s'étendant sur un côté du premier siège et du deuxième siège;
- au moins un dispositif d'occultation comprenant :
   - un rideau, comprenant une première extrémité et une deuxième extrémité, et étant déployable entre une position repliée et une position déployée,
   - un organe de stockage du rideau dans sa position repliée, connecté à la première extrémité du rideau et étant solidaire du premier siège, et
   - un organe de fixation du rideau, adapté pour maintenir le rideau dans sa position déployée, la deuxième extrémité du rideau étant connectée à l'organe de fixation lorsque le rideau est dans sa position déployée, dans lequel le rideau est déployable selon une direction horizontale dans le véhicule entre la position repliée et la position déployée, l'organe de fixation du rideau étant solidaire du deuxième siège.

L'invention s'applique aux véhicules de transport de passager. Dans ces véhicules, l'agencement intérieur du véhicule doit assurer un confort optimal pour chacun des passagers. A cet effet, l'agencement intérieur de certains véhicules comprend des dispositifs d'occultation.

WO 2018/033599 A1 divulgue un agencement intérieur de véhicule.

De tels dispositifs d'occultation comprennent notamment des rideaux déployables en regard d'une fenêtre du véhicule. De tels rideaux sont notamment déployables de haut en bas et permettent de bloquer la lumière provenant hors du véhicule, en particulier pour limiter l'éblouissement des passagers du véhicule.

Un agencement intérieur comprenant de tels dispositifs d'occultation est aussi connu de FR 3 066 957 A1. Un tel agencement ne donne toutefois pas entière satisfaction. En effet, les rideaux de tels dispositifs étant disposés en regard de fenêtres ne permettent pas à chacun des passagers de contrôler un dispositif d'obturation mais permettent seulement à certain des passagers de contrôler ces dispositifs d'obturation, pour l'ensemble des passagers. Un tel agencement intérieur ne permet en outre pas d'améliorer la confidentialité de l'espace attribué à chacun des passagers mais permet seulement l'isolation visuelle de l'intérieur du véhicule par rapport à l'extérieur du véhicule.

Un but de l'invention est donc de proposer un agencement de véhicule permettant à chacun des passagers de disposer de plus de possibilités d'aménagement intérieur.

A cet effet, l'invention a pour objet un véhicule conforme à la revendication 1.

Un véhicule comprenant un agencement intérieur de véhicule dans lequel le rideau est déployable horizontalement et dans lequel l'organe de fixation du rideau est solidaire d'un deuxième siège permet, de façon particulièrement avantageuse, de déployer le rideau d'occultation depuis des sièges n'étant pas disposés à proximité d'une cloison du véhicule. Un tel agencement permet ainsi d'équiper un quelconque siège du véhicule d'un dispositif d'obturation, offrant la possibilité à un utilisateur du siège de contrôler le dispositif d'occultation pour s'isoler visuellement de l'extérieur du véhicule ou du reste du véhicule.

Suivant d'autres aspects avantageux de l'invention, le véhicule comporte les caractéristiques de l'une des revendications 2 à 7.

L'invention a également pour objet un procédé conforme à la revendication 8.

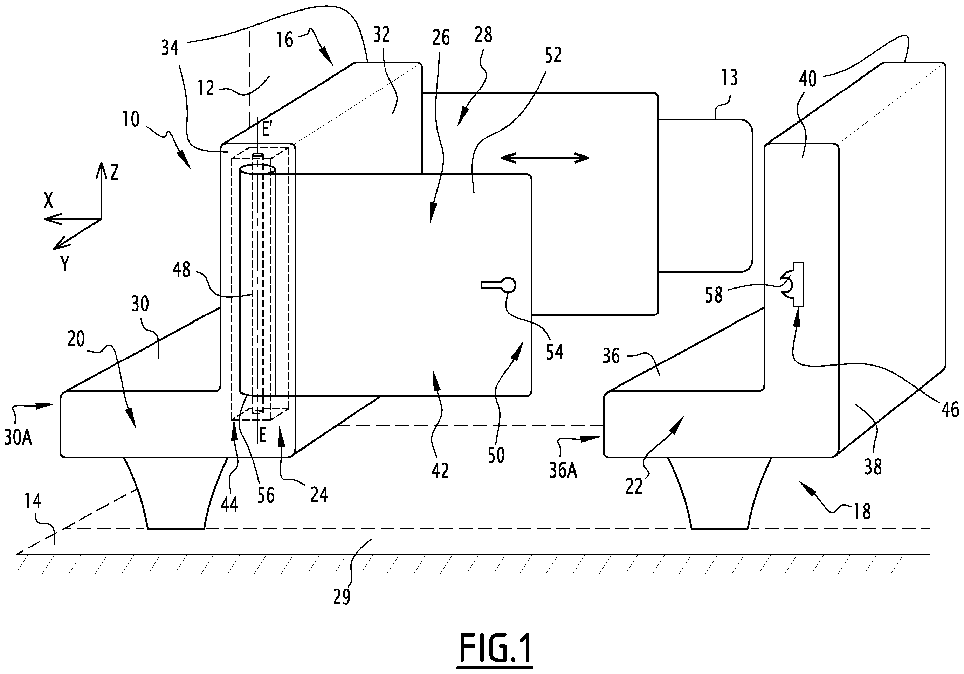

L'invention sera mieux comprise à la lecture de la description qui va suivre, donnée uniquement à titre d'exemple non limitatif et faite en se référant à [Fig 1] la figure unique, sur laquelle est représenté schématiquement et en perspective un agencement intérieur de véhicule selon l'invention.

Dans la description qui suit, on considère une base orthonormée directe (X, Y, Z). La direction d'élévation Z est définie selon la hauteur du véhicule et correspond par exemple à la direction verticale lorsque le véhicule est sur une voie horizontale. La direction longitudinale X correspond à la direction avant-arrière du véhicule et la direction transversale Y correspond à la largeur du véhicule.

Les termes « avant » et « arrière » sont définis par rapport à la direction longitudinale X dans le sens normal de circulation du véhicule. Les termes « gauche » et « droite » sont définis par rapport à la direction transversale Y dans le sens normal de circulation du véhicule. Les termes « supérieur » et « inférieur » ainsi que « haut » et « bas » sont définis par rapport à la direction d'élévation Z.

En référence à la figure, un véhicule 10 comprend une cloison 12 et un plancher 14, définissant un habitacle 16 du véhicule. Le véhicule 10 comprend un agencement intérieur 18 de véhicule disposé dans l'habitacle 16.

Le véhicule 10 est un véhicule de transport de passagers. Le véhicule 10 est de préférence un véhicule ferroviaire, tel un train régional ou un train à grande vitesse. En variante, le véhicule 10 est un véhicule routier, tel un bus.

La cloison 12 est par exemple une cloison délimitant un intérieur d'un extérieur du véhicule 10. La cloison 12 comprend alors de préférence au moins une fenêtre 13 disposée dans une région latérale sensiblement verticale de la cloison.

Le plancher 14 s'étend horizontalement dans le véhicule, c'est-à-dire sensiblement parallèle au plan formé par les axes longitudinal X et transversal Y.

L'agencement intérieur 18 comprend un premier siège 20, un deuxième siège 22, et au moins un dispositif d'occultation 24. Dans la variante présentée sur la figure, l'agencement intérieur 18 comprend deux dispositifs d'occultation 24, nommés dans la suite de la description premier dispositif d'occultation 26 et deuxième dispositif d'occultation 28.

Le premier siège 20 et le deuxième siège 22 délimitent un couloir 29 s'étendant sur un côté du premier siège 20 et du deuxième siège 22.

Le premier siège 20 comprend une première assise 30 et un premier dossier 32.

Le premier siège 20 est adapté pour supporter un utilisateur du véhicule lorsque l'utilisateur est assis sur le premier siège 20.

La première assise 30 s'étend de préférence sensiblement parallèlement au plancher 14.

Le premier dossier 32 s'étend de préférence principalement selon la direction d'élévation Z. Dans une variante particulière, le premier dossier 32 est légèrement incliné par rapport à la première assise 30, le premier dossier 32 s'étendant selon un plan formant un angle compris entre 90° et 60° par rapport au plan selon lequel s'étend la première assise 30.

Le premier dossier 32 et la première assise 30 définissent horizontalement une première direction d'assise, depuis le premier dossier 32 vers une extrémité libre 30A de la première assise 30. La direction d'assise est orientée depuis le premier dossier 32 vers l'extrémité libre de la première assise 30. En d'autre termes, la première direction d'assise est orientée suivant le regard d'un utilisateur assis sur le premier siège 20 et regardant en face de/devant lui.

Le premier dossier 32 comprend deux flancs 34, disposés de part et d'autre du premier dossier 32, latéralement à la première direction d'assise.

Le deuxième siège 22 comprend une deuxième assise 36 et un deuxième dossier 38.

Le deuxième siège 22 est adapté pour supporter un utilisateur du véhicule lorsque l'utilisateur est assis sur le deuxième siège 22.

La deuxième assise 36 s'étend de préférence sensiblement parallèlement au plancher 14.

Le deuxième dossier 38 s'étend de préférence principalement selon la direction d'élévation Z. Dans une variante particulière, le deuxième dossier 38 est légèrement incliné par rapport à la deuxième assise 36, le deuxième dossier 38 s'étendant selon un plan formant un angle compris entre 90° et 60° par rapport au plan selon lequel s'étend la deuxième assise 36.

Le deuxième dossier 38 et la deuxième assise 36 définissent horizontalement une deuxième direction d'assise, depuis le deuxième dossier 38 vers une extrémité libre 36A de la deuxième assise 36. La deuxième direction d'assise est orientée depuis le deuxième dossier 38 vers l'extrémité libre de la deuxième assise 36. En d'autre termes, la deuxième direction d'assise est orientée suivant le regard d'un utilisateur assis sur le deuxième siège 22 regardant en face de/devant lui.

Le deuxième dossier 38 comprend deux flancs 40, disposés de part et d'autre du deuxième dossier 38, latéralement à la deuxième direction d'assise.

Dans la variante présentée sur la figure, la première direction d'assise et la deuxième direction d'assise sont parallèles. Elles ont la même orientation, par exemple vers l'avant du véhicule 10 ou vers l'arrière du véhicule 10.

Le premier siège 20 et le deuxième siège 22 sont par exemple adjacents selon la première et la deuxième direction d'assise. Le premier siège 20 et le deuxième siège font alors par exemple partie de deux rangées de sièges adjacentes suivant la direction longitudinale X.

Dans la variante présentée sur la figure, le premier siège 20 est disposé devant le deuxième siège 22 suivant la deuxième direction d'assise. Le premier dossier 32 fait alors face à la deuxième assise 36.

Le dispositif d'occultation 24 comprend un rideau 42, un organe de stockage du rideau 44 et un organe de fixation du rideau 46.

Le dispositif d'occultation 24 s'étend de préférence sur un côté du deuxième siège 22, latéralement à la deuxième direction d'assise et/ou sur un côté du premier siège 20, latéralement à la première direction d'assise.

Dans la variante représentée, dans laquelle l'agencement intérieur 18 comprend un premier dispositif d'occultation 26 et un deuxième dispositif d'occultation 28, le premier dispositif d'occultation 26 s'étend de préférence sur un premier côté du deuxième siège 22, latéralement à la deuxième direction d'assise, et le deuxième dispositif d'occultation 28 s'étend de préférence sur un deuxième côté du deuxième siège 22, latéralement à la deuxième direction d'assise, le deuxième côté étant opposé au premier côté par rapport au deuxième siège 22.

Le dispositif d'occultation 24 s'étend par exemple le long du couloir 29 ou en regard de la fenêtre 13. Dans l'exemple de la figure 1, le premier dispositif d'occultation 26 s'étend le long du couloir 29 et le deuxième dispositif d'occultation 28 s'étend en regard de la fenêtre 13
Le rideau 42 comprend une première extrémité 48 et une deuxième extrémité 50. Le rideau 42 comprend de préférence une feuille 52.

La feuille 52 est de préférence enroulable. La feuille 52 est par exemple formée par une toile. La feuille 52 est par exemple opaque. En variante, la feuille 52 est translucide.

L'épaisseur de la feuille 52 correspond à la plus petite dimension de la feuille 52.

La longueur de la feuille 52, correspondant à la dimension enroulée de la feuille lorsque la feuille est enroulable, est de préférence comprise entre 0,5m et 2,5m.

La largeur de la feuille 52, correspondant à la dimension de la feuille perpendiculaire à l'épaisseur et à la longueur de la feuille, est de préférence comprise entre 0,5 m et 1,5 m.

La première extrémité 48 est connectée à l'organe de stockage 44. La première extrémité 48 s'étend de préférence dans la continuité de la feuille 52. La première extrémité 48 est par exemple collée à l'organe de stockage 44.

La deuxième extrémité 50 comprend de préférence un élément engageable 54 qui sera décrit ultérieurement. La deuxième extrémité 50 s'étend de préférence dans la continuité de la feuille 52. La deuxième extrémité 50 comprend de préférence un élément rigidifiant (non représenté), s'étendant selon toute la largeur de la feuille 52.

Le rideau 42 est déployable entre une position repliée et une position déployée. Le rideau 42 est repliable entre la position déployée et la position repliée.

Lorsqu'il est dans sa position repliée, le rideau 42 est disposé dans l'organe de stockage 44. Lorsqu'il est dans sa position dépliée, le rideau 42 est au moins partiellement déployé hors de l'organe de stockage 44 en étant disposé entre l'organe de stockage 44 et l'organe de fixation 46. Il connecte l'organe de stockage 44 et l'organe de fixation 46.

Le rideau 42 est déployable selon la direction horizontale dans le véhicule 10, notamment suivant l'axe longitudinal X.. Le rideau 42 est déployable par translation, en particulier par écartement, de la deuxième extrémité 50 par rapport à la première extrémité 48 selon une direction horizontale.

Le rideau 42 est repliable selon la direction horizontale dans le véhicule 10. Le rideau 42 est repliable par translation, en particulier par rapprochement, de la deuxième extrémité 50 par rapport à la première extrémité 48.

La direction de déploiement/repli est notamment illustrée par la double flèche visible sur la figure.

Le rideau 42 en position déployée s'étend alors sensiblement verticalement, dans un plan sensiblement vertical parallèle à la direction horizontale.

L'organe de stockage 44 du rideau est solidaire du premier siège 20.

L'organe de stockage 44 est en particulier disposé sur l'un des flancs 34 du premier dossier 32.

L'organe de stockage 44 comprend de préférence un enrouleur 56 et comprend par exemple un boitier disposé autour de l'enrouleur 56. Le rideau est alors déployable entre sa position repliée et sa position déployée par déroulement autour de l'enrouleur 56 et le rideau est repliable entre sa position déployée et sa position repliée par enroulement autour de l'enrouleur 56. Dans la variante représentée sur la figure, la feuille 52 est entièrement enroulée autour de l'enrouleur 56 et est disposée entre l'enrouleur 56 et le boitier lorsque le rideau 42 est dans sa position repliée.

L'enrouleur 56 définit un axe d'enroulement E-E' et est mobile en rotation autour de l'axe E-E' par rapport au premier siège 20.

L'enrouleur 56 comprend avantageusement des moyens de rappel (non représentés). Les moyens de rappel sont adaptés pour entrainer l'enrouleur 56 en rotation autour de l'axe E-E' et pour amener le rideau 42 de sa position déployée à sa position repliée, par enroulement autour de l'enrouleur 56. Les moyens de rappel sont par exemple formés par au moins un ressort de torsion.

L'axe d'enroulement E-E' est ici vertical ou incliné par rapport à la verticale d'un angle inférieur à 45°. Il suit avantageusement l'un des flancs 34 du premier dossier 32.

L'organe de fixation 46 est solidaire du deuxième siège 22.

L'organe de fixation 46 est en particulier disposé sur l'un des flancs 40 du deuxième dossier 38.

Dans l'exemple de la figure, l'organe de fixation 46 est disposé sur un flanc 40 du deuxième dossier 38 aligné avec un flanc 34 du premier dossier 32 sur lequel est disposé l'organe de stockage 44.

L'organe de fixation 46 est adapté pour maintenir le rideau 42 dans sa position déployée. La deuxième extrémité 50 du rideau est connectée à l'organe de fixation 46 lorsque le rideau 42 est dans sa position déployée.

L'organe de fixation 46 comprend de préférence un élément d'engagement 58, en particulier lorsque le rideau 42 comprend un élément engageable 54.

L'élément engageable 54 est adapté pour être engagé dans l'élément d'engagement 58. En particulier, lorsqu'il est engagé dans l'élément d'engagement 58, l'élément engageable 54 coopère avec l'élément d'engagement 58 pour maintenir le rideau 42 dans sa position déployée. L'élément engageable 54 coopère par exemple avec l'élément d'engagement 58 pour résister à un effort de rappel généré par un organe de rappel tel que décrit précédemment et transmis par la feuille 52 à l'élément engageable 54.

Comme illustré sur la figure, l'élément engageable 54 et l'élément d'engagement 58 sont par exemple des éléments de forme complémentaires, encliquetables l'un dans l'autre. En variante, l'élément engageable 54 et l'élément d'engagement 58 sont formés par tout couple d'élément pouvant être attachés/détachés l'un de l'autre par un utilisateur. L'élément engageable 54 et l'élément d'engagement 58 sont par exemple formés par des aimants ou par des éléments en VELCROS (marque de fabrique).

Un procédé d'utilisation d'un agencement intérieur 18 tel que précédemment décrit va maintenant être présenté.

Un agencement intérieur 18 de véhicule est tout d'abord fourni, les rideau 42 de l'agencement intérieur étant fournis dans une position repliée.

Un utilisateur désirant être visuellement isolé de l'extérieur du véhicule 10 ou d'une autre région du véhicule 10 déploie le rideau 42 en le déplaçant de sa position repliée à sa position déployée par la traction de la deuxième extrémité 50 en direction de l'organe de fixation 46 du rideau.

L'utilisateur connecte ensuite la deuxième extrémité 50 du rideau à l'organe de fixation 46 du rideau lors d'une étape de connexion de la deuxième extrémité 50 du rideau à l'organe de fixation 46 du rideau, pour maintenir le rideau 42 dans sa position déployée.

Lors de cette étape, l'utilisateur engage par exemple l'élément engageable 54 dans l'élément d'engagement 58, de sorte à ce que le rideau 42 soit maintenu dans sa position déployée.

Lorsque l'utilisateur ne souhaite plus être isolé visuellement de l'extérieur du véhicule 10 ou d'une autre région du véhicule 10, l'utilisateur déconnecte la deuxième extrémité 50 de l'organe de fixation 46.

L'utilisateur exerce par exemple un effort supérieur à un effort seuil sur l'élément engageable 54 pour le désengager de l'élément d'engagement 58. En variante, l'élément engageable 54 est désengagé de l'élément d'engagement 58 par une cinématique particulière.

Le rideau 42 est ensuite amené dans sa position repliée par traction de la deuxième extrémité 50 en direction de l'organe de stockage 44 par l'utilisateur et/ou par l'organe de rappel d'un enrouleur 56 tel que précédemment décrit 56.

Un agencement intérieur 18 dans lequel le premier siège 20 et le deuxième siège 22 sont adjacents permet à un utilisateur de l'agencement intérieur 18 de contrôler le dispositif d'occultation 24 pour un seul siège.

La position du premier siège 20 situé devant le deuxième siège 22 est particulièrement avantageuse pour faciliter la préhension du rideau 42 par un utilisateur de l'agencement intérieur 18.

Un rideau 42 comprenant une feuille 52 enroulable est avantageux en raison de la compacité d'une telle feuille 52 lorsque le rideau 42 est dans sa position repliée.

L'utilisation d'un élément d'engagement 58 et d'un élément engageable 54 permet le maintien simplifié du rideau 42 dans sa position déployée.

La position de l'organe de stockage 44 et de l'organe de fixation 46 sur les flancs 34, 40 des premier 32 et deuxième 38 dossiers et la position du dispositif d'occultation 24 par rapport aux sièges 20,22 assure une position du rideau 42 dans sa position déployée permettant une bonne isolation visuelle de l'utilisateur par rapport au reste du véhicule 10 ou par rapport à l'extérieur du véhicule 10.

L'utilisation de deux dispositifs d'occultation 24 améliore l'isolation visuelle de l'utilisateur en offrant la possibilité pour chaque utilisateur de déployer les rideaux 42 pour former une structure semblable à une cabine individuelle, permettant d'offrir à l'utilisateur un espace de haute confidentialité.

## Revendications

1. Véhicule ferroviaire ou routier de transport de passagers (10), comprenant un agencement intérieur (18) de véhicule (10), comprenant :
- un premier siège (20), comprenant une première assise (30) et un premier dossier (32), définissant horizontalement une première direction d'assise, depuis le premier dossier (32) vers une extrémité libre (30A) de la première assise (30) ;
- un deuxième siège (22), comprenant une deuxième assise (36) et un deuxième dossier (38), définissant horizontalement une deuxième direction d'assise, depuis le deuxième dossier (38) vers une extrémité libre (36A) de la deuxième assise (36),
le premier (20) et le deuxième (22) siège délimitant un couloir (29) s'étendant sur un côté du premier siège (20) et du deuxième siège (22); l'agencement comprenant :
- au moins un dispositif d'occultation (24) comprenant :
- un rideau (42), comprenant une première extrémité (48) et une deuxième extrémité (50), et étant déployable entre une position repliée et une position déployée,
- un organe de stockage (44) du rideau (42) dans sa position repliée, connecté à la première extrémité du rideau (48) et étant solidaire du premier siège (20), et
- un organe de fixation du rideau (46), adapté pour maintenir le rideau (42) dans sa position déployée, la deuxième extrémité du rideau (50) étant connectée à l'organe de fixation (46) lorsque le rideau (42) est dans sa position déployée,
dans lequel le rideau (42) est déployable selon une direction horizontale dans le véhicule (10) entre la position repliée et la position déployée, l'organe de fixation (46) du rideau (42) étant solidaire du deuxième siège (22), **caractérisé en ce que** l'agencement intérieur (18) comprend deux dispositifs d'occultation (24), un premier dispositif d'occultation (26) s'étendant sur un premier côté du deuxième siège (22), latéralement à la deuxième direction d'assise, un deuxième dispositif d'occultation (28) s'étendant sur un deuxième côté du deuxième siège (22), latéralement à la deuxième direction d'assise, le deuxième côté étant opposé au premier côté par rapport au deuxième siège (22),
le premier dispositif d'occultation (24) s'étendant en position déployée le long du couloir (29) et le deuxième dispositif d'occultation s'étendant en position déployée en regard d'une fenêtre (13) du véhicule.

2. Véhicule (10) selon la revendication 1, dans lequel la première et la deuxième direction d'assise sont parallèles, le premier (20) et le deuxième (22) sièges étant adjacents selon la première et la deuxième direction d'assise.

3. Véhicule (10) selon la revendication 1 ou 2, dans lequel le premier siège (20) est disposé devant le deuxième siège (22) suivant la deuxième direction d'assise.

4. Véhicule (10) selon l'une quelconque des revendications précédentes, dans lequel le rideau (42) comprend une feuille (52) enroulable et l'organe de stockage (44) comprend un enrouleur (56), le rideau (42) étant déployable entre sa position repliée et sa position déployée et repliable entre sa position déployée et sa position repliée, par déroulement, respectivement enroulement, autour de l'enrouleur (56).

5. Véhicule (10) selon l'une quelconque des revendications précédentes, dans lequel l'organe de fixation (46) comprend un élément d'engagement (58), la deuxième extrémité (50) du rideau comprenant un élément engageable (54) adapté pour être engagé dans l'élément d'engagement (58).

6. Véhicule (10) selon l'une quelconque des revendications précédentes, dans lequel l'organe de stockage (44) du rideau (42) est disposé sur un flanc (34) du premier dossier (32) et/ou l'organe de fixation (46) du rideau (42) est disposé sur un flanc (40) du deuxième dossier (38).

7. Véhicule (10) selon l'une quelconque des revendications précédentes, dans lequel le dispositif d'occultation (24) s'étend sur un côté du deuxième siège (22), latéralement à la deuxième direction d'assise et/ou sur un côté du premier siège (20), latéralement à la première direction d'assise.

8. Procédé d'utilisation d'un agencement intérieur (18) d'un véhicule ferroviaire ou routier de transport de passagers (10), comprenant les étapes suivantes :
- fourniture d'un véhicule (10) selon l'une quelconque des revendications 1 à 7, le rideau (42) de l'agencement intérieur (18) étant fourni dans une position repliée,
- traction de la deuxième extrémité (50) du rideau suivant une direction horizontale en direction de l'organe de fixation (46) du rideau, et
- connexion de la deuxième extrémité (50) du rideau à l'organe de fixation (46) du rideau pour maintenir le rideau (42) dans sa position déployée.

## Patentansprüche

1. Schienen- oder Straßenfahrzeug
zur Fahrgastbeförderung (10), umfassend eine
Innenanordnung (18) für ein Fahrzeug (10), umfassend:
- einen ersten Sitz (20), der eine erste Sitzfläche (30) und eine erste Rückenlehne (32) umfasst, die horizontal eine erste Sitzrichtung von der ersten Rückenlehne (32) zu einem freien Ende (30A) der ersten Sitzfläche (30) definiert;
- einen zweiten Sitz (22), der eine zweite Sitzfläche (36) und eine zweite Rückenlehne (38) umfasst, die horizontal eine zweite Sitzrichtung von der zweiten Rückenlehne (38) zu einem freien Ende (36A) der zweiten Sitzfläche (36) definiert,
wobei der erste (20) und der zweite (22) Sitz einen Korridor (29) begrenzen, der sich auf einer Seite des ersten (20) und des zweiten (22) Sitzes erstreckt; wobei die Anordnung umfasst:
- mindestens eine Verdeckungsvorrichtung (24) mit:
- einem Vorhang (42), der ein erstes Ende (48) und ein zweites Ende (50) umfasst und zwischen einer gefalteten und einer entfalteten Position entfaltet werden kann,
- ein Speicherelement (44) zur Aufbewahrung des Vorhangs (42) in seiner gefalteten Position, das mit dem ersten Ende des Vorhangs (48) verbunden ist und fest mit dem ersten Sitz (20) verbunden ist, und
- ein Vorhangbefestigungselement (46), das dazu geeignet ist, den Vorhang (42) in seiner entfalteten Position zu halten, wobei das zweite Ende des Vorhangs (50) mit dem Befestigungselement (46) verbunden ist, wenn sich der Vorhang (42) in seiner entfalteten Position befindet,
wobei der Vorhang (42) in einer horizontalen Richtung im Fahrzeug (10) zwischen der gefalteten Position und der entfalteten Position entfaltbar ist, wobei das Befestigungselement (46) des Vorhangs (42) fest mit dem zweiten Sitz (22) verbunden ist, wobei die Innenanordnung (18) zwei Verdeckungsvorrichtungen (24) umfasst, wobei sich eine erste Verdeckungsvorrichtung (26) über eine erste Seite des zweiten Sitzes (22) seitlich der zweiten Sitzrichtung erstreckt, eine zweite Verdeckungsvorrichtung (28), die sich auf einer zweiten Seite des zweiten Sitzes (22) seitlich der zweiten Sitzrichtung erstreckt, wobei die zweite Seite in Bezug auf den zweiten Sitz (22) der ersten Seite gegenüberliegt,
die erste Verdeckungsvorrichtung (24) sich in ausgefahrener Position entlang des Ganges (29) erstreckt und die zweite Verdunkelungsvorrichtung sich in ausgefahrener Position gegenüber einem Fenster (13) des Fahrzeugs erstreckt.

2. Fahrzeug (10) nach Anspruch 1, bei dem die erste und die zweite Sitzrichtung parallel sind, wobei der erste (20) und der zweite (22) Sitz in der ersten und der zweiten Sitzrichtung nebeneinander liegen.

3. Fahrzeug (10) nach Anspruch 1 oder 2, wobei der erste Sitz (20) entlang der zweiten Sitzrichtung vor dem zweiten Sitz (22) angeordnet ist.

4. Fahrzeug (10) nach einem der vorhergehenden Ansprüche, wobei der Vorhang (42) eine aufrollbare Folie (52) umfasst und das Speicherelement (44) eine Aufwickelvorrichtung (56) umfasst, wobei der Vorhang (42) zwischen seiner gefalteten Position und seiner entfalteten Position entfaltbar ist und zwischen seiner entfalteten Position und seiner gefalteten Position durch Abwickeln bzw. Aufwickeln um die Aufwickelvorrichtung (56) faltbar ist.

5. Fahrzeug (10) nach einem der vorhergehenden Ansprüche, wobei das Befestigungselement (46) ein Eingriffselement (58) umfasst, wobei das zweite Ende (50) des Vorhangs ein eingreifbares Element (54) umfasst, das so beschaffen ist, dass es mit dem Eingriffselement (58) in Eingriff gebracht werden kann.

6. Fahrzeug (10) nach einem der vorhergehenden Ansprüche, bei dem das Speicherelement (44) des Vorhangs (42) an einer Flanke (34) der ersten Rückenlehne (32) angeordnet ist und/oder das Befestigungselement (46) des Vorhangs (42) an einer Flanke (40) der zweiten Rückenlehne (38) angeordnet ist.

7. Fahrzeug (10) nach einem der vorhergehenden Ansprüche, wobei sich die Verdeckungsvorrichtung (24) auf einer Seite des zweiten Sitzes (22) seitlich zur zweiten Sitzrichtung und/oder auf einer Seite des ersten Sitzes (20) seitlich zur ersten Sitzrichtung erstreckt.

8. Verfahren zur Verwendung einer Innenanordnung (18) eines Schienen- oder Straßenfahrzeugs
zur Fahrgastbeförderung (10), die die folgenden Schritte umfasst:
- Bereitstellen eines Fahrzeugs (10) nach einem der Ansprüche 1 bis 7, wobei der Vorhang (42) der Innenanordnung (18) in einer gefalteten Position bereitgestellt wird,
- Ziehen des zweiten Endes (50) des Vorhangs in einer horizontalen Richtung in Richtung des Befestigungselements (46) des Vorhangs, und
- Verbindung des zweiten Endes (50) des Vorhangs mit dem Vorhangbefestigungselement (46), um den Vorhang (42) in seiner entfalteten Position zu halten.

## Claims

1. A rail or road vehicle
for passenger transport (10), comprising an internal
fitting (18) for a vehicle (10), comprising:
- a first seat (20), comprising a first seat cushion (30) and a first backrest (32), defining a first seating direction horizontally from the first backrest (32) to a free end (30A) of the first seat cushion (30);
- a second seat (22), comprising a second seat cushion (36) and a second backrest (38), defining a second seating direction horizontally from the second backrest (38) towards a free end (36A) of the second seat cushion (36),
the first (20) and second (22) seats defining an aisle (29) extending to one side of the first (20) and second (22) seats; the arrangement comprising:
- at least one concealment device (24) comprising:
- a curtain (42), comprising a first end (48) and a second end (50), and being deployable between a folded position and a deployed position,
- a component (44) for storing the curtain (42) in its folded position, connected to the first end of the curtain (48) and integral with the first seat (20), and
- a curtain fixing component (46), adapted to hold the curtain (42) in its deployed position, the second end of the curtain (50) being connected to the fixing component (46) when the curtain (42) is in its deployed position,
in which the curtain (42) can be deployed in a horizontal direction in the vehicle (10) between the folded position and the deployed position, the fixing member (46) of the curtain (42) being integral with the second seat (22), **characterised in that** the interior arrangement (18) comprises two concealment devices (24), a first concealment device (26) extending on a first side of the second seat (22), laterally to the second seating direction, a second concealment device (28) extending on a second side of the second seat (22), laterally to the second seating direction, the second side being opposite the first side with respect to the second seat (22),
the first concealment device (24) extending in the deployed position along the corridor (29) and the second blackout device extending in the deployed position facing a window (13) of the vehicle.

2. A vehicle (10) according to claim 1, in which the first and second seating directions are parallel, the first (20) and second (22) seats being adjacent along the first and second seating directions.

3. A vehicle (10) according to claim 1 or 2, in which the first seat (20) is arranged in front of the second seat (22) in the second seating direction.

4. A vehicle (10) according to any one of the preceding claims, in which the curtain (42) comprises a rollable sheet (52) and the storage component (44) comprises a roller (56), the curtain (42) being able to be deployed between its folded position and its unfolded and foldable positions between its deployed position and its folded position, by unrolling, respectively rolling, about the roller (56).

5. A vehicle (10) according to any one of the preceding claims, wherein the fixing component (46) comprises an engaging element (58), the second end (50) of the curtain comprising an engaging element (54) adapted to be engaged in the engaging element (58).

6. A vehicle (10) according to any one of the preceding claims, in which the storage component (44) for the curtain (42) is arranged on a side (34) of the first backrest (32) and/or the fixing component (46) for the curtain (42) is arranged on a side (40) of the second backrest (38).

7. A vehicle (10) according to any one of the preceding claims, in which the concealment device (24) extends on one side of the second seat (22), laterally to the second seating direction and/or on one side of the first seat (20), laterally to the first seating direction.

8. Method of using an interior arrangement (18) of a railway or road vehicle for
passenger transport (10), comprising the following steps:
- provision of a vehicle (10) according to any one of claims 1 to 7, the curtain (42) of the interior arrangement (18) being provided in a folded position,
- pulling the second end (50) of the curtain in a horizontal direction towards the curtain fixing component (46), and
- connection of the second end (50) of the curtain to the curtain fixing component (46) to hold the curtain (42) in its extended position.
